Europäisches Patentamt

European Patent Office

Office européen des brevets

(19)

(11) **EP 1 024 053 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.⁷: **B60R 11/02**, B60R 21/04

(21) Anmeldenummer: **00101835.7**

(22) Anmeldetag: **29.01.2000**

(54) **Kraftfahrzeug mit elektroakustischer Anlage**

Vehicle with electro-acoustic installation

Véhicule avec installation électroacoustique

(84) Benannte Vertragsstaaten:
**DE FR GB IT**

(30) Priorität: **29.01.1999 DE 19903393**

(43) Veröffentlichungstag der Anmeldung:
**02.08.2000 Patentblatt 2000/31**

(73) Patentinhaber: Harman Audio Electronic
**Systems GmbH**
**94315 Straubing (DE)**

(72) Erfinder:
• **Bachmann, Wolfgang, Prof.Dr.**
**41516 Grevenbroich (DE)**
• **Krump, Gerhard, Dr.**
**94374 Schwarzach (DE)**
• **Regl, Hans-Jürgen**
**93049 Regensburg (DE)**
• **Ziganki, Andreas**
**40822 Mettmann (DE)**

(74) Vertreter:
**Patentanwälte Westphal, Mussgnug & Partner**
**Am Riettor 5**
**78048 Villingen-Schwenningen (DE)**

(56) Entgegenhaltungen:
WO-A-97/09844          WO-A-98/13942
WO-A-98/42536          WO-A-98/52289
DE-A- 4 409 542        DE-A- 19 649 140

## Beschreibung

Die Erfindung betrifft ein Kraftfahrzeug, insbesondere ᵖersonenkraftfahrzeug, mit einer Karosserie, mit einer in der Karosserie enthaltenen Innenverkleidung und mit wenigstens einem in dem Kraftfahrzeug enthaltenen Lautsprecher, der eine Membrane mit einer Vorderseite und einer Rückseite sowie wenigstens ein die Membrane antreibendes Antriebssystem aufweist, wobei die Membrane zumindest einen Teil der Innenverkleidung bildet und ihre Vorderseite dem Innenraum zugekehrt ist.

Derartige Anordnungen in einem Kraftfahrzeug sind beispielsweise aus der WO 98/42536 A, der WO 98 52289 A, der WO 98/13942 A und der die Merkmale des Oberbegriffs des Anspruchs 1 zeigenden WO 9709844 bekannt.

Zur Beschallung des Innenraumes von Kraftfahrzeugen werden bislang Konus- oder Kalottenlautsprecher verwendet. Um eine hinreichende Qualität der Tonwiedergabe im Fahrzeug zu erreichen, sind viele derartige Lautsprecher an den unterschiedlichsten Stellen in dem Fahrzeug verteilt untergebracht.

Die Konus- und Kalottenlautsprecher besitzen eine entsprechend geformte, in sich steife Membrane, die als Ganzes eine kolbenähnliche Bewegung ausführen soll. Insbesondere die Tieftöner benötigen eine verhältnismäßig große Membranfläche mit einer entsprechenden großen räumlichen Tiefe, wobei gleichzeitig ein vergleichsweise großer Hub erforderlich ist. Damit führt insbesondere die Unterbringung der Tieftonsysteme zu erheblichen Platzproblemen.

Andererseits ist eine Lautsprechervariante bekannt, bei der die Membran als Biegeschwinger arbeitet, der an einer bestimmten Stelle zu Biegeschwingungen angeregt wird. Diese Biegeschwingerlautsprecher benötigen wegen der kleinen Amplitude noch größere Flächen als die Tieftonsysteme von Kolbenlautsprechern. Dafür bieten sie den wesentlichen Vorteil einer geringeren räumlichen Tiefe, gemessen senkrecht zu ihrer Membranfläche.

Um das geringe Platzangebot in einem Kraftfahrzeug besser nutzen zu können, wird in der WO 98/42536 eine Lautsprecheranordnung für ein Kraftfahrzeug vorgeschlagen, die eine Biegeschwingermembran und ein die Membrane antreibendes Antriebssystem aufweist, wobei ein Teil der Fahrzeuginnenverkleidung an das Antriebssystem angekoppelt und somit als für die Schallabstrahlung vorgesehene Membrane wirksam ist. Jedoch können dabei nur bestimmte Verkleidungselemente verwendet werden, da ansonsten eine zufriedenstellende Schallabstrahlung nicht gewährleistet wird. Ungeeignet sind vor allem solche Verkleidungselemente, die außer der Verkleidung eine weitere Funktion erfüllen sollen.

Ausgehend hiervon ist es Aufgabe der Erfindung, ein Kraftfahrzeug mit wenigstens einem Lautsprecher mit Biegeschwingemembran zu schaffen, bei dem darüber hinaus ein zusätzlicher Schutz der Fahrzeuginsassen erzielt wird.

Die Aufgabe wird erfindungsgemäß durch ein Kraftfahrzeug mit den Merkmalen des Patentanspruches 1 gelöst. Ausgestaltungen und Weiterbildungen des Erfindungsgedankens sind Gegenstand von Unteransprüchen.

Vorteil der Erfindung ist es, dass gleichzeitig drei Funktionen erfüllt werden. Neben der eigentlichen Funktion der Innenraumverkleidung dient ein erfindungsgemäßes Verkleidungselement darüber hinaus auch zur Schallabstrahlung und zum Schutze der Fahrzeuginsassen. Dadurch wird der knapp bemessene Innenraum eines Kraftfahrzeuges optimal genutzt. Erreicht wird dies bei einem Kraftfahrzeug der eingangs genannten Art dadurch, dass die Membrane (2) einen Wabenkern (8) enthält, der bei einem Aufprall von Körperteilen von Kraftfahrzeugpassagieren als Schutzpolster gegen Verletzungen wirkt.

Die Verwendung von ausgewählten Teilen der Innenverkleidung als entsprechend ausgebildete Lautsprechermembrane ermöglicht es, relativ große Flächen als Membrane für den Lautsprecher zu verwenden und zum anderen einen umfassenden Schutz für die Insassen zu bieten.

Bevorzugt befindet sich dabei die Membrane an einer Stelle, an die bei einem Aufprall, insbesondere bei einem Frontalcrash, Körperteile von Kraftfahrzeugpassagieren geschleudert werden können.

Gut geeignet für eine erhöhte Schutzwirkung ist beispielsweise der Teil der Innenverkleidung, der Teil einer Verkleidung des Armaturenbretts ist. Des Weiteren kann sich die Membrane zum Schutz der Knie von Kraftfahrzeugpassagieren, welche auf den Vordersitzen sitzen, an der Unterseite des Armaturenbretts befinden. Dies ist ein besonders geeigneter Platz, da bei einem Frontalaufprall die Passagiere dazu neigen, mit den Knien in den Raum unter dem Armaturenbrett zu rutschen. Bevorzugt wird auch die Membran als Deckel eines Stauraums für einen Airbag ausgebildet.

In besonderer Weise eignet sich auch ein Teil des Dachhimmels, wobei insbesondere vorgesehen ist, dass die Membrane zum Schutz des Kopfes von Kraftfahrzeugpassagieren, die auf den Vordersitzen sitzen, in dem Dachhimmel angrenzend an die Frontscheibe angeordnet ist. Dabei kann der Lautsprecher, dessen Membrane im Dachhimmel integriert ist, als Basslautsprecher dienen, weil hier die größte, geschlossene, zur Verfügung stehenden Fläche verwendet werden kann.

Die Membrane kann aber auch alternativ oder zusätzlich ein Teil der Innenverkleidung der Tür sein.

Für die Ausgestaltung der Rückseite der Rückenlehne der Vordersitze gilt sinngemäß Ähnliches, und auch hier kann die Membrane dem Schutz der Knie der im hinteren Fahrzeugbereich sitzenden Passagiere dienen.

Lautsprecher, die als Schutzpolster Einsatz finden sollen, weisen eine gewisse Stärke und eine gewisse innere Dämpfung auf. Die für den Lautsprecher geeignete Membrane hat vorzugsweise einen Sandwichaufbau. Sie weist über ihre Erstreckung gesehen beispielsweise eine im Wesentlichen konstante Dicke auf.

Dazu kann die Membrane in einen Raum gespannt sein, wobei das anregende System an der Rückseite der Membrane angeordnet ist. Das anregende System kann ein piezoelektrisches System oder ein elektrodynamisches System sein.

Um Übergangsstellen zwischen der Membran und sonstigen Teilen der Innenverkleidung zu kaschieren bzw. das Eindringen von Schmutz zu verhindern, ist es von Vorteil, wenn die Membrane mit einer Folie überspannt ist, die sich vorzugsweise allseitig einstückig in den angrenzenden Bereich der Innenverkleidung fortsetzt.

Schließlich kann gemäss einer anderen Ausführungsform anstelle der Innenverkleidung ein entsprechender Ausrüstungsgegenstand des Innenraums verwendet werden wie zum Beispiel die Rückseite der Lehne eines Vordersitzes.

In der Zeichnungen sind Ausführungsbeispiele des Gegenstandes der Erfindung dargestellt. Es zeigen:

Fig. 1    den prinzipiellen Aufbau eines Lautsprechers mit einer als Biegeschwinger betriebenen Membrane in einer perspektivischen Darstellung und im Ausschnitt,

Fig. 2    das andere System für den Lautsprecher nach Fig. 1 in einem Schnitt,

Fig. 3    ein stark schematisches Kraftfahrzeug in einem Längsschnitt und

Fig. 4    ein weiteres Ausführungsbeispiel für die Membrane des Lautsprechers nach Fig. 1.

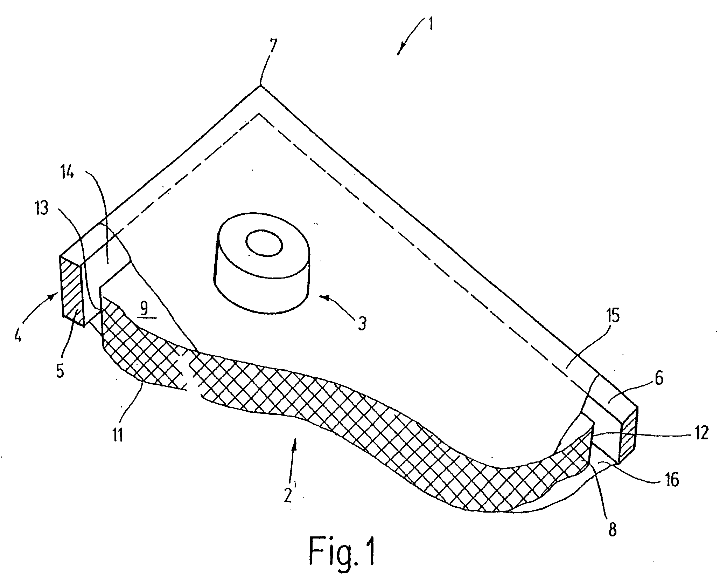

Fig. 1 zeigt in einer geschnittenen Perspektive schmematisiert einen Multiresonanzplattenlautsprecher 1 mit einer als Biegeschwinger arbeitenden Membran 2. Diese wird mit Hilfe eines elektrodynamischen Antriebssystems 3 in Schwingung versetzt, um den gewünschten Schall abzustrahlen.

Der Lautsprecher 1 weist einen rechteckigen Rahmen 4 auf, der sich aus insgesamt vier paarweise zueinander parallelen Rahmenstreben 5 und 6 zusammensetzt. Wegen der geschnittenen perspektivischen Darstellung ist die zu der Rahmenleiste 5 parallele Rahmenleiste sowie die zu der Rahmenleiste 6 parallele Rahmenleiste nicht erkennbar. Die Rahmenleiste 5, 6 sowie die übrigen Rahmenleisten stoßen an den entsprechenden Ecken 7 zusammen, an denen sie miteinander starr verbunden sind.

Die Rahmenleisten sind ein schmales rechteckiges Profil aus einem steifen Material, beispielsweise einem dünnwandigen Aluminiumrohr und einem Kunststoffvollmaterial. Die große Achse des Querschnittsprofils steht senkrecht auf der von dem Rahmen 4 definierten Ebene. Die Stärke in dieser Richtung beträgt beispielsweise zwei Zentimeter.

Das Kantenverhältnis, das heißt das Verhältnis der Länge der Rahmenleiste 5 zu der Rahmenleiste 6 beträgt zweckmäßiger Weise $1:\sqrt{2}$. Dieses Kantenverhältnis entspricht dem beim Papierformat üblichen DIN-Format.

In der durch den Rahmen 4 aufgespannten Öffnung befinden sich die Membrane 2, die als Sandwich ausgeführt ist. Sie besteht aus einem in der Draufsicht rechteckigen Membrankern 8, beispielsweise aus einem Hartschaummaterial, der von einer Rückseite 9 einer von dem Betrachter wegweisenden Vorderseite 11, sowie insgesamt vier Seitenflächen 12, 13 begrenzt wird, von denen in der abgeschnittenen Darstellung lediglich zwei andeutungsweise an den Kanten zu erkennen sind. Die Dicke des Membrankerns 8 entspricht der Höhe des Profilquerschnitts der Rahmenleisten 5, 6.

Die Rückseite 9 des Membrankerns 8 liegt somit in einer Ebene mit der betreffenden benachbarten Schmalseite des Rahmens 4, ebenso wie die vordere Seite 11 ebenfalls in einer Ebene mit der angrenzenden Schmalseite des Rahmens 5 liegt.

Der Membrankern 8 ist in der Fläche etwas kleiner als die durch den Rahmen 4 begrenzte rechteckige Öffnung. Dadurch verbleibt allseitig zwischen dem Membrankern 8 und der Innenseite des Rahmens 4 ein umlaufender Spalt 14.

Die Befestigung des Membrankerns 8 in dem Rahmen 4 geschieht mit Hilfe zweier Folien 15 und 16. Die Folie 15 überdeckt die Rückseite 9 des Membrankerns 8 sowie den Umlauf in Spalte 14 und reicht bis über die benachbarte Schmalseite des Rahmens 4. Die Folie 15 ist sowohl mit dem Membrankern 8 als auch mit dem Rahmen 5 stoffschlüssig zum Beispiel durch Kleben verbunden.

Die Folie 16 ist deckungsgleich und ebenfalls mit der Vorderseite 11 stoffschlüssig verbunden. Sie überspannt den Spalt 14 und ist an der vorderen Schmalseite des Rahmens 4 aufgeklebt. Beide Folien 15 und 16 stehen in Richtung parallel zu der durch sie aufgespannten Fläche unter einer geringen Vorspannung, das heißt, sie sind über den Rahmen straff gespannt. Auf diese Weise wird der Membrankern 8 in der durch den Rahmen 4 umschlossenen, im Wesentlichen rechteckigen Öffnung zentriert gehalten. Der Membrankern 8 kann innerhalb des Rahmens 4 Biegeschwingungen vollführen, wobei wegen des umlaufenden Luftspalts 14, der eine Breite von ca. 1 cm hat, die seitlichen Ränder des Membrankerns am Mitschwingen nicht gehindert sind.

Die Folie 16 bildet gleichzeitig die Vorderseite der Membrane 2, während die Folie 15 deren Rückseite darstellt.

Eine andere Möglichkeit besteht darin, nur die vordere Folie 15 zur Befestigung des Membrankerns vorzusehen und die rückseitige Folie ganz wegzulassen.

Für einen Lautsprecher, der auch im Bassbereich, also ab einer Frequenz von etwa 50 Hz abstrahlen soll, wird eine Membranfläche entsprechend etwa DIN A1 benötigt. Ein Mitteltonlautsprecher mit einer unteren Grenzfrequenz von ca. 200 Hz benötigt eine Membranfläche entsprechend etwa DIN A3.

Das Antriebssystem 3 sitzt neben einer durch den rechteckigen Rahmen 4 definierten Diagonalen, in keinem Fall aber auf einer Symmetrieachse. Es hat von der unmittelbar benachbarten Ecke 7 einen Abstand von etwa ¼ der gesamten diagonalen Länge und ist auf der Rückseite bzw. rückseitigen Folie 15 angeordnet. Geeignete Materialien für die beiden Folien 15 und 16 sind Aluminium, Glasfaserfolien, Karbonfaserfolien oder Aramitfaserfolien, jeweils mit einem Young-Modul im Bereich von 70 GPa.

Durch Verwendung eines weiteren Antriebssystems können noch mehr Moden angeregt werden.

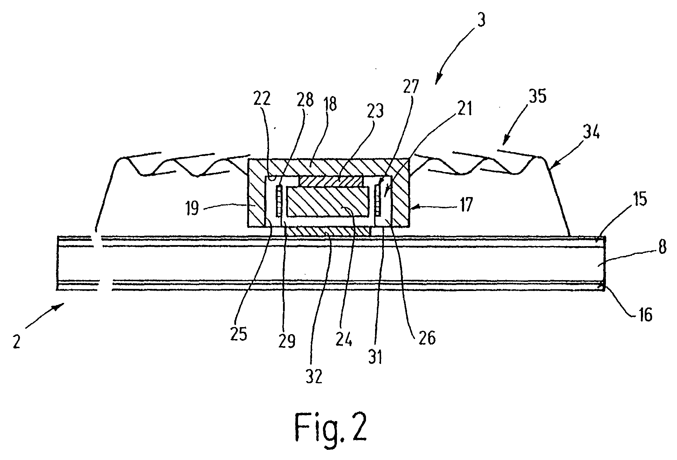

Der Aufbau des elektrodynamischen Antriebssystems 3 ergibt sich aus Fig. 2. Zu dem Antriebssystem gehört ein als Rückschluss dienender ferromagnetischer Topf 17 mit einem planen Boden 18 sowie einem einstückig angeformten zylindrischen Rand 19. Der Rand 19 sowie der Boden 18 begrenzen einen zylindrischen Innenraum 21, der sich in Richtung auf die Membrane 2 hin öffnet.

Auf einer zu der Membrane 2 zeigenden planen Innenfläche 22 des Topfes 17 sitzt eine permanentmagnetische planparallele Scheibe 23. Die Scheibe 23 besteht zum Beispiel aus Neodymmaterial. Auf der von dem Boden 18 wegweisenden Seite der ferromagnetischen Scheibe 23 ist eine zylindrische, planparallele Scheibe 24 befestigt, die ebenfalls ferromagnetisch ist und zusammen mit einer zylindrischen Innenwand 25 des Topfes 17 einen zylindrischen Luftspalt 26 begrenzt. In dem zylindrischen Luftspalt 26 befindet sich eine Schwingspule 27, deren Wicklungen 28 auf einem rohrförmigen Träger 29 aufgewickelt sind. Der zylindrische rohrförmige Träger 29 ist seinerseits an der Rückseite einer flexiblen scheibenförmigen Zentrierspindel 31 befestigt, die an der freien Stirnseite des Topfes 17 auf dessen Wand 19 festgeklebt ist. Die Verbindung zwischen der Zentrierspindel 31 und der Membrane 2, genauer gesagt der rückseitigen Folie 15, geschieht mit Hilfe einer scheibenförmigen Distanzplatte 32.

Um bei großen Antriebssystemen 3 ein Verkanten des Topfes 17 zu verhindern, ist zusätzlich ein Verankerungstopf 34 vorhanden, dessen Boden 35 ähnlich wie die von Lautsprechern bekannte Zentrierspindel mit mehreren zueinander koaxialen Sicken ausgebildet ist, um eine gute Nachgiebigkeit in Richtung senkrecht zu der durch den Boden 35 definierten Ebene zu bilden. Die Ränder des Befestigungstopfes 34, der zum Beispiel aus einem getränkten Gewebe besteht, sind mit der rückseitigen Folie 15 - wie gezeigt - verklebt.

Das Antriebssystem 3 hat insgesamt eine Masse von weniger als 100g bei einem bis in den Bassbereich arbeitenden Lautsprecher.

Im Gegensatz zu dem bekannten Konuslautsprechern, bei denen das Magnetsystem am Lautsprecherkorb befestigt ist und die Membrane zwischen dem Lautsprecherkorb und der Schwingspule in Bewegung gesetzt wird, sitzt bei dem als Biegeschwinger wirkenden Lautsprecher 1 das Antriebssystem zur Gänze an der in den Abmessungen sehr viel größeren Membrane 2.

Die für die Schallabstrahlung notwendigen Schwingungen der Membrane 2 werden durch die Bewegungen der Schwingspule 27 erreicht, die sich in dem Magnettopf 17 senkrecht zur Membrane 2 bewegt. Der Magnettopf 17 wirkt dabei als seismische Masse und bleibt bei den Bewegungen der Schwingspule 27 selbst weitgehend in Ruhe, so dass die Membrane 2 relativ zu dem Magnetkopf 17 eine Bewegung ausführt, die in mittelbarer Nähe des Magnettopfes 17 eine Bewegung senkrecht zu der durch die Membrane 2 definierten Ebene ist. Über die gesamte Erstreckung der Membrane 2 gesehen, handelt es sich um Biegeschwingungen, die abhängig von der Frequenz Schwingungsknotenlinien entsprechend chladnischer Figuren entstehen lassen.

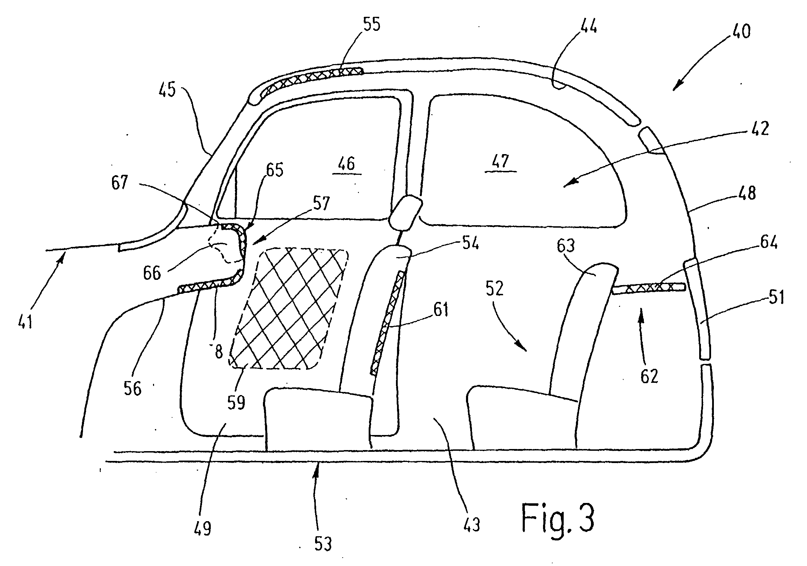

Die Anwendung des beschriebenen Lautsprechers 1 ist in Fig. 3 dargestellt. Fig. 3 zeigt in einer stark schematisierten Form einen Längsschnitt durch einen PKW 40. Der PKW 40 weist eine Karosserie 41 auf, die im Bereich ihres Fahrgastraumes 42 mit einer seitlichen Innenverkleidung 43 einschließlich einem Dachhimmel 44 versehen ist. In dem Schnitt sind eine Frontscheibe 45, eine vordere rechte Türseitenscheibe 46, eine hintere rechte Seitenscheibe 47 und eine Heckscheibe 48 zu erkennen.

Die Seitenscheibe 46 sitzt in bekannter Weise im oberen Bereich einer rechten Türe 49, während die Heckscheibe 48 in der Öffnung einer Heckplatte 51 untergebracht ist.

Aufgrund der Innenverkleidung 43 entsteht an praktisch sämtlichen Stellen des Innenraums eine zweischalige Konstruktion, die nach außen durch die Rohkarosserie und nach innen durch die Innenverkleidung 43 bzw. den Dachhimmel 44 begrenzt ist.

Außerdem enthält das Fahrzeug 40 in seinem Innenraum 42 einen Rücksitz 52 sowie Vordersitze, von denen der Beifahrersitz 53 mit seiner Rückenlehne 54 zu erkennen ist.

Das erfindungsgemäße Kraftfahrzeug 1 enthält an mehreren Stellen der Innenverkleidung Flachlautsprecher mit Biegemembranen, wie sie in den Fig. 1 und 2 schematisch gezeigt sind.

Ein erster Lautsprecher bzw. ein Basslautsprecher 55, angedeutet durch Kreuzschraffur, ist in den Dachhimmel 44 oberhalb der Oberkante der Frontscheibe 45 integriert. Die Anordnung ist so getroffen, dass die Vorderseite des Lautsprechers 55 glatt und absatzlos die Kontur des Dachhimmels 44 so fortsetzt, als wäre der Lautsprecher 55 nicht enthalten. Um einen glatten Übergang zu bekommen, ist die den Dachhimmel 44 bildende Folie vorzugsweise ganzflächig mit der vorderen Folie 16 des Lautsprechers 1 verklebt. Das Antriebssystem 3 zeigt nach außen in Richtung auf die Rohkarosserie. Es befindet sich somit zwischen dem Dachhimmel 44 und der Karosserie 41.

Der Lautsprecher 55 kann sich nahezu über die gesamte Fahrzeugbreite und ein beträchtliches Stück in Fahrzeuglängsrichtung erstrecken. Auf diese Weise kann er bei einem Stereosystem als Subwoofer wirken.

Als Folge der mehrachsigen Krümmung des Daches in dem Bereich, in dem sich der Lautsprecher 55 befindet, ist dessen Membran 2 entsprechend gekrümmt. Diese mehrachsige Krümmung hat jedoch auf das Abstrahlverhalten des Lautsprechers 55 praktisch keinen Einfluss. Er arbeitet genauso, wie dies im Zusammenhang mit den Fig. 1 und 2 erläutert wurde.

Eine weitere Stelle, an der ein Flachlautsprecher mit einem Aufbau nach Fig. 1 und 2 untergebracht werden kann, ist beispielsweise eine Unterseite 56 eines Armaturenbrettes 57. An dieser Unterseite 56 ist wenigstens ein Lautsprecher 58 angeordnet. Da die Unterseite des Armaturenbrettes 57 in der Regel ebenfalls mit einer Verkleidung versehen ist, befindet sich der Lautsprecher 58 an der bezogen auf den Fahrzeugmittelpunkt nach außen weisenden Seite dieser Verkleidung. Auch hierbei ist die Verkleidung wiederum mit der "akustischen Vorderseite" des Lautsprechers 58 verbunden, dessen Aufbau den Darstellungen in den Fig. 1 und 2 entspricht.

Zusätzlich zu den vor dem Beifahrersitz 53 befindlichen Lautsprecher 58 kann vor dem Fahrersitz ein weiterer, ähnlich gestalteter Lautsprecher vorhanden sein, um Stereowiedergabe im entsprechenden Frequenzbereich zu ermöglichen.

Eine weitere Möglichkeit, einen Lautsprecher unterzubringen, ist die Innenverkleidung der vorderen Seitentür 49. Hinter der Innenverkleidung befindet sich ebenfalls ein durch Kreuzschraffur angedeuteter Flachlautsprecher 59. Die die Innenverkleidung bildende Haut ist wiederum mit der Membrane 2 verklebt. Eine andere Möglichkeit besteht darin, die Membrane 2 mit Hilfe von durch die Membrane gehenden Schrauben an Blechteilen der Tür 49 anzuschrauben.

Es versteht sich, dass bei allen Ausführungsvarianten der in der Innenverkleidung 43 integrierten Lautsprecher die Wandstärke der Innenverkleidung im Bereich der Lautsprecher verhältnismäßig dünn ausgeführt ist, um deren Biegeschwingung nicht mehr als unbedingt nötig zu bedämpfen.

Weitere Orte zur Unterbringung sind der Bezug bzw. die Verkleidung der Rückenlehne 54 und zwar an deren Rückseite. Es ist dort ein Lautsprecher 61 integriert. Der äußere Bezug setzt sich wiederum glatt in der Membrane 2 fort.

Eine in geeigneter Weise ausgebildete Hutablage 62, die zwischen einer Rückensitzlehne 63 des Rücksitzes 52 und der Heckklappe schwenkbar angeordnet ist, ist ebenfalls ein geeigneter Ort zur Unterbringung eines Flächenlautsprechers 64.

Schließlich kommt als Ort zur Unterbringung insbesondere kleinerer im Hoch- und Mitteltonbereich arbeitender Lautsprecher ein Deckel 65 in Frage, der einen Raum 66 verschließt, in dem ein Airbag untergebracht ist. In diesem Deckel 65 befindet sich ein Lautsprecher 67.

Beim gezeigten Ausführungsbeispiel handelt es sich um einen Airbag im Armaturenbrett. Gleichwohl sind aber auch andere Airbagdeckel in gleicher Weise geeignet.

Nicht dargestellt, jedoch ebenfalls möglich, ist die Unterbringung des Lautsprechers in der Sonnenblende.

Wie sich aus den Erläuterungen zum prinzipiellen Aufbau des Flächenlautsprechers 1 ergibt, besteht der überwiegende Teil des Volumens der Membrane 2 aus einem Hartschaummaterial, also einem Material, das bei Verpackungen und dergleichen als Schutz gegen Stöße und Beschädigungen der verpackten Ware verwendet wird. Lautsprecher, wie die Lautsprecher 55, 67 und 58 befinden sich an Stellen, an denen bei einem Auffahrunfall Körperteile von Fahrzeuginsassen gelangen können. Die polsternde Wirkung der Membrane unterdrückt Verletzungen bei der Berührung mit den Körperpartien. Insoweit erfüllen die Lautsprecher an den besagten Stellen gleichzeitig aufgrund ihrer Membrangestaltung eine Schutzfunktion. Sie dienen dem Insassenschutz. Da das Antriebssystem 3 vergleichsweise sehr klein ist und auch eine sehr geringe Masse hat, bezogen auf die Gesamtausdehnung der betreffenden Membran 2, ist es ohne Weiteres möglich, bei all diesen Lautsprechern 55, 58, 67 die Antriebssysteme in Gegenden zu bringen, bei denen nicht die Gefahr besteht, dass Körperteile, die die Membrane in einem Unfall berühren, auch gleichzeitig mit dem Antriebssystem kollidieren, das sich zwar auf der Rückseite, also zwischen der Membrane und der Rohkarosserie befindet, aber doch bei zusammengedrückter Membrane 2 das Verletzungsrisiko erhöhen könnte.

Im Übrigen wirkt die Membrane 2 aufgrund ihrer Struktur auch wärmeisolierend.

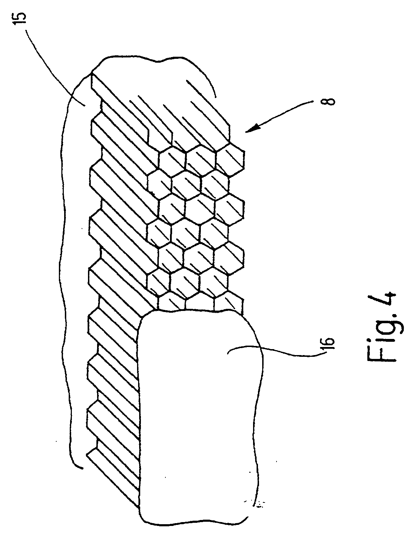

In Fig. 4 ist ausschnittsweise eine andere Gestaltung der Membrane 2 und des Lautsprechers 1 nach den Fig. 1 und 2 dargestellt. Der Membrankern hat hierbei eine Wabenstruktur, wobei die Längsachsen der einzelnen Zellen senkrecht zu den beiden Folien 15 und 16 verlaufen. Als Material für den Wabenkern eignen sich beispielsweise Aluminiumfolien oder Normexpapier.

Das spezifische Gewicht für den Membrankern 8 liegt bei weniger als ca. 40kg/m$^2$.

Bei sehr kleinen Schwingamplituden, wie sie im Hochtonbereich auftreten, können als Antriebssystem anstelle des gezeigten elektrodynamischen Systems auch Piezoschwinger eingesetzt werden, die auf die Rückseite der Membrane 2 geklebt werden.

Bei einem Kraftfahrzeug sind Teile der Innenverkleidung aus Membranen von Lautsprechern gebildet, die nach dem Biegeschwingerprinzip arbeiten. Dadurch wird einerseits ein guter Wirkungsgrad bei tiefen Frequenzen erreicht, weil große Flächenbereiche zur Schallabstrahlung herangezogen werden können, und andererseits ergibt sich aus der Struktur der Membrane ein Polsterungseffekt, der Verletzungen vorbeugt, wenn bei einem Unfall Körperteile mit den entsprechenden Bereichen der Innenverkleidung kollidieren.

**Patentansprüche**

1. Kraftfahrzeug (40), insbesondere Personenkraftfahrzeug, mit einer Karosserie (41),
   mit einer in der Karosserie (41) enthaltenen Innenverkleidung (43) und
   mit wenigstens einem in dem Kraftfahrzeug (40) enthaltenen Lautsprecher (1, 55, 58, 64, 67), der eine Membrane (2) mit einer Vorderseite und einer Rückseite sowie wenigstens ein die Membrane (2) antreibendes Antriebssystem (3) aufweist, wobei die Membrane (2) zumindest einen Teil der Innenverkleidung (43) bildet und ihre Vorderseite dem Innenraum (42) zugekehrt ist, **dadurch gekennzeichnet, dass** die Membrane (2) bei einem Aufprall von Körperteilen von Kraftfahrzeugpassagieren als Schutzpolster gegen Verletzungen wirkt und dass das Antriebssystem (3) so angebracht ist dass Körperteile, die die Membrane (2) in einem Unfall berühren nicht gleichzeitig mit dem Antriebssystem (3) Kollidieren.

2. Kraftfahrzeug nach Anspruch 1,
   **dadurch gekennzeichnet, dass** der Teil der Innenverkleidung (43) ein Teil einer Verkleidung (56) des Armaturenbretts (57) ist.

3. Kraftfahrzeug nach Anspruch 2,
   **dadurch gekennzeichnet, dass** sich die Membrane (2) an der Unterseite des Armaturenbretts (57) befindet.

4. Kraftfahrzeug nach Anspruch 1 oder 2,
   **dadurch gekennzeichnet, dass** die Membrane (2) einen Deckel (65) eines Stauraumes (66) für einen Airbag bildet.

5. Kraftfahrzeug nach Anspruch 1,
   **dadurch gekennzeichnet, dass** der Teil der Innenverkleidung (43) einen Teil des Dachhimmels (44) ist.

6. Kraftfahrzeug nach Anspruch 5,
   **dadurch gekennzeichnet, dass** die Membrane (2) in dem Dachhimmel (44) angrenzend an die Frontscheibe (45) angeordnet ist.

7. Kraftfahrzeug nach Anspruch 5 oder 6,
   **dadurch gekennzeichnet, dass** der Lautsprecher (55), dessen Membrane (2) im Dachhimmel (44) integriert ist, als Basslautsprecher dient.

8. Kraftfahrzeug nach einem der vorherigen Ansprüche,
   **dadurch gekennzeichnet, dass** der Teil der Innenverkleidung (43) ein Teil der Innenverkleidung einer Tür (49) ist.

9. Kraftfahrzeug nach einem der vorherigen Ansprüche,
   **dadurch gekennzeichnet, dass** das Antriebssystem (3) an der Rückseite der Membrane (2) angeordnet ist.

10. Kraftfahrzeug nach einem der vorherigen Ansprüche,
    **dadurch gekennzeichnet, dass** die Membrane (2) mit einer Folie überspannt ist, die sich vorzugsweise allseitig einstückig in einem angrenzenden Bereich der Innenverkleidung (43) fortsetzt.

11. Kraftfahrzeug nach Anspruch 1,
    **dadurch gekennzeichnet, dass** die Membrane (2) zumindest einen Teil einer rückseitigen Verkleidung einer Rückenlehne (54) eines Vordersitzes (53) ist.

12. Kraftfahrzeug nach einem der vorherigen Ansprüche,
    **dadurch gekennzeichnet, dass** die Membrane (2) einen Wabenkern (8) enthält.

13. Kraftfahrzeug nach einem der vorherigen Ansprüche,
    **dadurch gekennzeichnet, dass** die Membrane (2) einen Hartschaumkern (8) enthält.

**Claims**

1. Motor vehicle (40), particularly a passenger motor vehicle, with a body (41), with a lining (43) contained in the body (41) and with at least one loudspeaker (1, 55, 58, 64, 67) which is contained in the vehicle (40) and has a diaphragm (2) with a front face and a rear face as well as at least one drive system (3) driving the diaphragm (2), wherein the diaphragm (2) forms at least a part of the lining (43) and its front face faces the interior (42), **characterised in that** in the event of a collision with body parts of passengers in the vehicle the diaphragm (2) acts as a protective cushion against injuries, and that the drive system (3) is mounted in such a way that body parts which touch the diaphragm (2) in the event of an accident do not simultaneously collide with the drive system (3).

2. Motor vehicle as claimed in Claim 1, **characterised in that** the part of the lining (43) is a part of a covering (56) of the dashboard (57).

3. Motor vehicle as claimed in Claim 2, **characterised in that** the diaphragm (2) is located on the underside of the dashboard (57).

4. Motor vehicle as claimed in Claim 1 or 2, **characterised in that** the diaphragm (2) forms a cover (65) of a stowage space (66) for an airbag.

5. Motor vehicle as claimed in Claim 1, **characterised in that** the part of the lining (43) is a part of the roof (44).

6. Motor vehicle as claimed in Claim 5, **characterised in that** the diaphragm (2) is disposed in the roof (44) adjacent to the windscreen (45).

7. , Motor vehicle as claimed in Claim 5 or 6, **characterised in that** the loudspeaker (55), the diaphragm (2) of which is integrated in the roof (44), serves as a bass loudspeaker.

8. Motor vehicle as claimed in any one of the preceding claims, **characterised in that** the part of the lining (43) is a part of the lining of a door (49).

9. Motor vehicle as claimed in any one of the preceding claims, **characterised in that** the drive system (3) is disposed on the rear face of the diaphragm (2).

10. Motor vehicle as claimed in any one of the preceding claims, **characterised in that** the diaphragm (2) is covered with a film which preferably extends integrally all round in an adjacent region of the lining (43).

11. Motor vehicle as claimed in Claim 1, **characterised in that** the diaphragm (2) is at least a part of a rear covering of a back rest (54) of a front seat (53).

12. Motor vehicle as claimed in any one of the preceding claims, **characterised in that** the diaphragm (2) contains a honeycomb core (8).

13. Motor vehicle as claimed in any one of the preceding claims, **characterised in that** the diaphragm (2) contains a hard foam core (8)

**Revendications**

1. Véhicule automobile (40), en particulier véhicule automobile de tourisme,
avec une carrosserie (41),
avec un revêtement intérieur (43) installé dans la carrosserie (41) et avec
au moins un haut-parleur (1, 55, 58, 64, 67) installé dans le véhicule automobile (40), haut-parleur lequel comporte une membrane (2) avec une face avant et une face arrière, et au moins un système de commande (3) entraînant la membrane (2), sachant que la membrane (2) forme au moins une partie du revêtement intérieur (43) et sa face avant est tournée vers l'espace intérieur (42), **caractérisé en ce que** la membrane (2) agit comme coussin de protection contre les blessures en cas de heurt des parties du corps des passagers du véhicule, et **en ce que** le système de commande (3) est disposé de telle sorte qu'en cas d'accident, les parties du corps qui touchent la membrane (2) n'entrent pas simultanément en collision avec le système de commande (3).

2. Véhicule automobile selon la revendication 1, **caractérisé en ce que** la partie du revêtement intérieur (43) est une partie d'un revêtement (56) du tableau de bord (57).

3. Véhicule automobile selon la revendication 2, **caractérisé en ce que** la membrane (2) se trouve sur le dessous du tableau de bord (57).

4. Véhicule automobile selon la revendication 1 ou 2, **caractérisé en ce que** la membrane (2) forme un couvercle (65) d'un espace de rangement (66) pour un airbag.

5. Véhicule automobile selon la revendication 1, **caractérisé en ce que** la partie du revêtement intérieur (43) est une partie du plafond (44).

6. Véhicule automobile selon la revendication 5, **caractérisé en ce que** la membrane (2) dans le plafond (44) a une disposition adjacente au pare-brise (45).

7. Véhicule automobile selon la revendication 5 ou 6, **caractérisé en ce que** le haut-parleur (55) dont la membrane (2) est intégrée dans le plafond (44), sert de haut-parleur de graves.

8. Véhicule automobile selon l'une des revendications précédentes, **caractérisé en ce que** la partie du revêtement intérieur (43) est une partie du revêtement intérieur d'une portière (49).

9. Véhicule automobile selon l'une des revendications précédentes, **caractérisé en ce que** le système de commande (3) est disposé sur le côté postérieur de la membrane (2).

10. Véhicule automobile selon l'une des revendications précédentes, **caractérisé en ce que** la membrane (2) est recouverte d'un film qui, d'une seule pièce, s'étend de préférence partout dans une zone attenante du revêtement intérieur (43).

11. Véhicule automobile selon la revendication 1, **caractérisé en ce que** la membrane (2) est au moins une partie d'un revêtement arrière d'un dossier (54) d'un siège avant (53).

12. Véhicule automobile selon l'une des revendications précédentes, **caractérisé en ce que** la membrane (2) comprend un noyau comportant une structure en nid d'abeilles (8).

13. Véhicule automobile selon l'une des revendications précédentes, **caractérisé en ce que** la membrane (2) comprend un noyau en mousse dure.

Fig.1

Fig. 2

Fig.3

Fig. 4